# EUROPÄISCHE PATENTSCHRIFT

(11) **EP 3 126 192 B1**
(45) Veröffentlichungstag und Bekanntmachung des Hinweises auf die Patenterteilung: **18.05.2022**
(21) Anmeldenummer: 15712598.0
(22) Anmeldetag: 24.03.2015
(51) Int. Cl.: B60Q 1/26, E05B 85/10, B60Q 1/00, E05B 17/10, F21S 43/14, F21S 43/239, F21S 43/241, F21S 43/243, F21S 43/247, F21S 43/27, F21S 45/50

(54) **ELEKTRONIKMODUL MIT BELEUCHTUNGSMITTEL FÜR EINE HANDHABE**
ELECTRONIC MODULE WITH LIGHTING MEANS FOR A HANDLE
MODULE ÉLECTRONIQUE COMPRENANT DES MOYENS D'ÉCLAIRAGE POUR UN ÉLÉMENT DE COMMANDE

(30) Priorität: 31.03.2014 DE 102014104545
(43) Veröffentlichungstag der Anmeldung: 08.02.2017
(73) Patentinhaber: Huf Hülsbeck & Fürst GmbH & Co. KG, 42551 Velbert (DE)
(72) Erfinder: REIFENBERG, Bernd, 45259 Essen (DE); BEXTERMÖLLER, Hubert, 45468 Mülheim an der Ruhr (DE); RHEIN, Michael, 41199 Mönchengladbach (DE)
(74) Vertreter: Bals, Rüdiger
(86) Internationale Anmeldenummer: PCT/EP2015/056203
(87) Internationale Veröffentlichungsnummer: WO 2015/150157

(56) Entgegenhaltungen:
- EP-A1- 1 760 227
- EP-A1- 2 179 890
- WO-A1-2013/022027
- WO-A1-2013/154052
- DE-A1-102008 042 330
- DE-U1- 29 811 417
- US-A1- 2013 130 674

## Beschreibung

Die vorliegende Erfindung betrifft ein Elektronikmodul, insbesondere für einen Türgriff eines Fahrzeugs nach dem Oberbegriff von Anspruch 1. Des Weiteren ist die vorliegende Erfindung auch auf einen Türgriff für ein Fahrzeug zum Öffnen und Schließen eines beweglichen Teils, wie z. B. einer Tür, Klappe oder dergleichen, nach dem Oberbegriff von Anspruch 13 gerichtet. Ferner umfasst die Erfindung auch ein Verfahren zum Herstellen eines erfindungsgemäßen Türgriffs mit insbesondere einem erfindungsgemäßen Elektronikmodul.

Aus dem Stand der Technik ist z. B. die Druckschrift DE 10 2012 107 189 A1 bekannt, die ein Elektronikmodul für eine Handhabe eines Türgriffs offenbart. Dabei ist in der Handhabe des Türgriffs das Elektronikmodul angeordnet. Um die einzelnen elektronischen Bauelemente sowie die Leiterplatte des Elektronikmoduls vor äußeren Umwelteinflüssen zu schützen, ist das Elektronikmodul mit einer Vergussmasse vergossen. Da jedoch das gesamte Elektronikmodul mit Vergussmasse vergossen ist, ist kein Beleuchtungsmittel vorgesehen, um z. B. eine Vorfeldbeleuchtung oder eine Griffmuldenbeleuchtung beim Türaußengriff zu realisieren.

Ferner ist aus dem Stand der Technik bekannt, dass Türaußengriffe mit einem Beleuchtungsmittel ausgestattet sind. Diese können auch im Türgriff angeordnet sein, wobei üblicherweise das Beleuchtungsmittel über eine elektrische Versorgungsleitung extern zu einem Elektronikmodul angeordnet ist. Hierbei wird häufig das Beleuchtungsmittel auch über einen Stecker mit dem Elektronikmodul elektrisch verbunden. Somit handelt es sich bei dem Beleuchtungsmittel und dem Elektronikmodul um zwei baulich getrennte Bauelemente, die nur durch eine elektrische Leitung, auch in Form einer Folie oder dergleichen, miteinander verbunden sind. In der Druckschrift DE 10 2010 061 643 A1 ist ein derartiger Türgriff mit einem kabelgebundenen Beleuchtungsmittel offenbart.

Weiterhin sind Türgriffe mit Beleuchtungsmitteln beispielsweise aus der US 2013/0130674 A1, der EP 1 760 227 A1 sowie der DE 10 2008 042 330 A1 bekannt.

Aufgabe der vorliegenden Erfindung ist es, ein Elektronikmodul, sowie einen Türgriff und auch ein Verfahren zur Herstellung eines Türgriffs bereitzustellen, bei dem zumindest die erwähnten Nachteile aus dem Stand der Technik überwunden werden. Insbesondere ist es eine Aufgabe der vorliegenden Erfindung, ein kompaktes und kostengünstiges Elektronikmodul sowie einen Türgriff herzustellen, der über eine erweiterte Funktionalität, z. B. mit Beleuchtung, verfügt. Auch ist es eine Aufgabe der Erfindung, das Elektronikmodul besonders gegen äußere Umwelteinflüsse zu schützen.

Die vorliegende Aufgabe wird durch ein Elektronikmodul, insbesondere für einen Türgriff eines Fahrzeugs, mit den Merkmalen des Anspruchs 1, insbesondere aus dem kennzeichnenden Teil, gelöst. Ebenfalls wird zur Lösung der Aufgabe ein Türgriff mit den Merkmalen des Anspruchs 13, insbesondere aus dem kennzeichnenden Teil, vorgeschlagen. Zusätzlich wird die Aufgabe der Erfindung auch durch ein Verfahren zum Herstellen eines Türgriffs mit den Merkmalen des Anspruchs 15, insbesondere aus dem kennzeichnenden Teil, gelöst. In den abhängigen Vorrichtungs- und Verfahrensansprüchen sind bevorzugte Weiterbildungen der Erfindung (des Elektronikmoduls und des Türgriffs sowie des Herstellverfahrens für den Türgriff) aufgeführt. Technische Merkmale, die zu dem erfindungsgemäßen Elektronikmodul und/oder dem erfindungsgemäßen Türgriff und/oder dem Herstellverfahren für einen Türgriff offenbart werden, gelten dabei auch wechselseitig, so dass diesbezüglich auch jeweils Bezug auf die unterschiedlichen Teilaspekte und Offenbarung der Erfindung genommen werden kann. Außerdem kann der erfindungsgemäße Türgriff mit dem erfindungsgemäßen Elektronikmodul ausgestattet sein und nach dem erfindungsgemäßen Herstellverfahren hergestellt werden.

Das erfindungsgemäße Elektronikmodul ist insbesondere für einen Türgriff eines Fahrzeugs vorgesehen, wodurch der Komfort des Türgriffs und somit des gesamten Fahrzeugs erhöht werden soll. Bei dem erfindungsgemäßen Elektronikmodul ist wenigstens ein Leiterelement vorgesehen, an dem zumindest ein elektrisches Bauteil elektrisch angeordnet ist. Das Leiterelement weist dabei verschiedene Leiterbahnen auf, um die einzelnen elektrischen Bauteile, die an dem Leiterelement angeordnet sind, elektrisch untereinander zu verbinden. Das Leiterelement und die elektrisch angeordneten Bauteile bilden dabei eine Elektronikeinheit. Diese Elektronikeinheit ist datentechnisch verbindbar mit zumindest einem fahrzeugseitigen System, insbesondere einem Sicherheitssystem, wie z. B. einem Zugangskontrollsystem, ein Motormanagementsystem oder dergleichen. Ferner kann die Elektronikeinheit auch elektrisch an die Bordspannung des Fahrzeugs angeschlossen sein. Des Weiteren weist das Elektronikmodul ein Beleuchtungsmittel auf, wodurch Licht ausstrahlbar ist. Folglich bildet das Beleuchtungsmittel mit dem Leiterelement eine bauliche Einheit von der Elektronikeinheit bzw. dem Elektronikmodul, was ein Kern der Erfindung darstellt. Hierbei ist das Beleuchtungsmittel vorzugsweise direkt an dem Leiterelement angeordnet. Idealerweise wird das Beleuchtungsmittel direkt mit den Leiterbahnen des Leiterelements elektrisch verbunden und somit am Leiterelement befestigt. Damit ist das Beleuchtungsmittel drahtlos bzw. leitungslos mit dem Elektronikmodul bzw. der Elektronikeinheit durch die direkte Anordnung an dem Leiterelement, angeordnet. Folglich bildet das Beleuchtungsmittel mit dem Leiterelement und den übrigen Bauelementen eine bauliche Einheit, die unlösbar zueinander ausgestaltet ist. Um die Elektronikeinheit weitestgehend vor äußeren Einflüssen, wie z. B. mechanischen Stößen, Feuchtigkeit, Staub und dergleichen, zu schützen, ist es denkbar, dass die Elektronikeinheit zumindest teilweise mit Vergussmasse umgeben ist. Dabei ist vorzugsweise nur das Beleuchtungsmittel nicht mit Vergussmasse umgeben, damit das Licht des Beleuchtungsmittels ungehindert ausstrahlen kann. Idealerweise kann ein derartiges Elektronikmodul innerhalb eines Türgriffs angeordnet werden, wobei in dem Türgriff zumindest ein Lichtfenster für das Licht vom Beleuchtungsmittel vorhanden ist. Ein derartiges Elektronikmodul kann auch ein zusätzliches Gehäuse aufweisen, in dem die Elektronikeinheit zumindest teilweise angeordnet ist, wobei das Elektronikmodul mit seinem Gehäuse in dem Türgriff integrierbar ist. Das Gehäuse selbst kann geschlossen ausgestaltet sein, wozu dann ebenfalls ein Lichtfenster vorhanden sein muss, um das vom Beleuchtungsmittel ausgestrahlte Licht an das Lichtfenster im Türgriff weiterleiten zu können.

Ein weiterer Kern der Erfindung ist es, dass wenigstens eine Lichtkappe bei dem Elektronikmodul vorgesehen ist, die zumindest ein Beleuchtungsmittel vor äußeren Einflüssen schützt und die Lichtkappe das vom Beleuchtungsmittel ausgestrahlte Licht weiterleitet. Dabei ist die Elektronikeinheit idealerweise von Vergussmasse umgeben, bis auf das Beleuchtungsmittel, welches frei von Vergussmasse ist. Da jedoch das Beleuchtungsmittel durch die Lichtkappe umgeben ist, ist die gesamte Elektronikeinheit mit dem Beleuchtungsmittel gegen äußere Einflüsse, wie z. B. Feuchtigkeit, Staub und dergleichen, geschützt. Außerdem kann die Elektronikeinheit direkt mit dem Beleuchtungsmittel und den übrigen elektrischen Bauteilen bestückt werden, so dass eine besonders einfache Fertigung möglich ist.

Erfindungsgemäß ist es denkbar, dass die Lichtkappe zumindest eine Öffnung mit einem Öffnungsrand aufweist, und wobei insbesondere die Lichtkappe einen Innenraum aufweist, in dem zumindest das Beleuchtungsmittel durch die Öffnung anordbar ist. Somit kann das Beleuchtungsmittel im Innenraum der Lichtkappe geschützt durch die Lichtkappe selbst angeordnet werden. Erfindungsgemäß ist der Öffnungsrand durch eine vorhandene Vergussmasse für die übrige Elektronikeinheit verschlossen. Hierbei ragt erfindungsgemäß der

Öffnungsrand der Lichtkappe vollständig in die Vergussmasse. Allerdings ragt zumindest ein Teil der Lichtkappe aus der Vergussmasse heraus, um das Licht des Beleuchtungsmittels, welches im Inneren der Lichtkappe angeordnet ist, nach außen weiterleiten zu können. Hierbei ist es denkbar, dass die Elektronikeinheit einen oberen und unteren Teil aufweist, wobei der untere Teil durch die Vergussmasse umgeben ist und der obere Teil aus der Vergussmasse herausragt, wobei am oberen Teil auch zumindest ein Beleuchtungsmittel angeordnet ist. Über dieses Beleuchtungsmittel ist dann die Lichtkappe gestülpt, wobei die Öffnung der Lichtkappe zum unteren Teil der Elektronikeinheit hin gerichtet ist und der Öffnungsrand der Lichtkappe erfindungsgemäß vollständig in die Vergussmasse, die die Elektronikeinheit umgibt, ragt. Wie bereits erwähnt, ist es zweckmäßig, dass das Beleuchtungsmittel direkt an dem Leiterelement angeordnet ist. Darunter kann verstanden werden, dass das Beleuchtungsmittel direkt an dem Leiterelement befestigt ist und auch einen elektrischen Kontakt zum Leiterelement aufweist.

Ferner ist es im Rahmen der Erfindung denkbar, dass die Lichtkappe zumindest teilweise transluzent bzw. transparent ausgestaltet ist. Auch kann die Lichtkappe zumindest teilweise transluzent und transparent ausgestaltet sein. Bei einer zweckmäßigen Ausgestaltung der Lichtkappe ist diese vollständig transparent bzw. vollständig transluzent aufgebaut. Unter transparent wird in der vorliegenden Erfindung verstanden, dass durchscheinende Objekte durch die Lichtkappe vollständig von den Konturen sichtbar bleiben. Im Gegensatz wird im Rahmen der vorliegenden Erfindung unter transluzent verstanden, dass eben von einem dahinterliegenden Objekt nur helle und dunkle Bereiche durch die Lichtkappe sichtbar sind und eben die Konturen des Objektes nicht scharf erkennbar sind. Um das von dem Beleuchtungsmittel ausgesendete Licht zu beeinflussen, kann die Lichtkappe zumindest teilweise gefärbte bzw. eingefärbte Bereiche aufweisen, durch die das Licht durchscheint und seine Wellenlänge bzw. Farbe verändert. Dabei ist es auch denkbar, dass die gesamte Lichtkappe gefärbt bzw. eingefärbt ist.

Als Material für die Lichtkappe können Glas oder Kunststoff vorgesehen sein. Dieses Material ist zumindest teilweise durchsichtig gegenüber sichtbarem Licht. Glas weist als Material für die Lichtkappe den Vorteil auf, dass es besonders beständig gegen mechanische Belastungen und auch Säuren und Basen ist. So ist die Oberfläche von Glas in der Regel deutlich kratzfester als eine vergleichbare Kunststoffoberfläche. Bei Kunststoff als Material für die Lichtkappe können folgende Materialien zum Einsatz kommen: Polycarbonat (kurz PC genannt), Polymethylmethacrylat (kurz PMMA genannt), Polyetherimid (kurz PEI genannt) und/oder Polysulfon (kurz PSU genannt). Diese Kunststoffe können durch Farbzusätze oder Additive, wie z. B. Farbpigmente eingefärbt werden. Auch ist eine Beschichtung des Materials der Lichtkappe von Innen und Außen denkbar, wie z. B. eine aufgedampfte Reflektionsschicht, die halblichtdurchlässig ausgestaltet ist. Bei Kunststoff als Material für die Lichtkappe ist der Vorteil, dass diese günstig im Spritzgussverfahren herstellbar ist. Auch können sogenannte 2K-Spritzgussteile für die Lichtkappe hergestellt werden, wobei der durchscheinende Bereich der Lichtkappe aus dem durchsichtigen oder durchscheinenden Material gefertigt ist und der übrige Bereich der Lichtkappe, der z. B. in die Vergussmasse ragt oder mit der Vergussmasse in Kontakt kommt, aus einem lichtundurchlässigen, kostengünstigen Kunststoff gefertigt ist. Kunststoff weist zusätzlich den Vorteil auf, dass er eine niedrigere Dichte als Glas aufweist und somit weniger Gewicht innehat.

Die erwähnte Lichtkappe kann als Lichtleiter mit einer Lichtaustrittsfläche für zumindest ein Beleuchtungsmittel dienen. Auch ist es denkbar, dass durch die Lichtkappe eine optische Linse gebildet wird, die monolithisch und materialeinheitlich mit der Lichtkappe ausgebildet ist. Auch kann an der Lichtkappe eine optische Linse angeordnet werden, die als separates Bauteil mit der Lichtkappe verbunden wird. Zusätzlich ist es denkbar, dass die Lichtkappe einen Leuchtvorsprung aufweist, wobei insbesondere am Leuchtvorsprung die Lichtaustrittsfläche für das ausgestrahlte Licht von dem Beleuchtungsmittel vorgesehen ist. Auch der Leuchtvorsprung kann monolithisch und materialeinheitlich mit der Lichtkappe ausgestaltet sein. Ebenfalls ist es denkbar, dass der Leuchtvorsprung auch als zusätzliches Bauteil mit der Lichtkappe verbunden wird, z. B. durch Aufschweißen oder Festkleben. Der Leuchtvorsprung dient zweckmäßigerweise gleichzeitig als Lichtleiter, um Licht aus dem Innenraum der Lichtkappe bis zur Lichtaustrittsfläche von der Lichtkappe weiterleiten zu können. Zweckmäßigerweise ist der Leuchtvorsprung als Fortsetzung der Außenkontur der Lichtkappe ausgestaltet. Bei einer besonders eleganten Ausgestaltung weist die Lichtkappe einen Lichtleiter, und einen Leuchtvorsprung auf, sowie ggf. auch eine optische Linse. Somit übernimmt die Lichtkappe mehrfache Funktionen, da sie einerseits das Beleuchtungselement vor äußeren Umwelteinflüssen schützen soll und andererseits zum Lichttransport dient, wobei auch noch eine Veränderung des ausgesandten Lichtes vom Beleuchtungsmittel stattfinden kann, durch die optische Linse oder eine Einfärbung der Lichtkappe oder einer Beschichtung, wodurch eine einseitige Transparenz der Lichtkappe erzielbar ist.

Vorteilhafterweise kann das Beleuchtungsmittel als zumindest eine Lampe, LED oder OLED ausgestaltet sein. Gerade LEDs und OLEDs zeichnen sich durch ihren niedrigen Energieverbrauch, sowie ihre Langlebigkeit aus. Dabei können LEDs oder OLEDs zum Einsatz kommen, die auch weißes oder weiß-gelbes Licht ausstrahlen. Um die Farbe des ausgestrahlten Lichts vom Beleuchtungsmittel zu beeinflussen, kann die Lichtkappe als Lichtfilter, wie bereits erwähnt, durch Einfärbung und dergleichen, zumindest bereichsweise ausgestaltet sein. Auch ist es denkbar, dass mehrere Beleuchtungsmittel, insbesondere in Form von LEDs und OLEDs nebeneinander angeordnet sind, um die Lichtausbeute zu erhöhen. Dabei können auch verschiedenfarbige LEDs und OLEDs zum Einsatz kommen, die ihr ausgestrahltes Licht mischen, um somit einen angenehmen Farbton mit entsprechender Lichtausbeute zu erzielen. Lampen als Beleuchtungsmittel weisen den Vorteil auf, dass sie anders als LEDs oder OLEDs keine fixe Eingangsspannung benötigen. Vielmehr können diese auch direkt mit 12 V oder 24 V betrieben werden, was in der Regel der Fahrzeugspannung eines PKW oder LKW entspricht.

Des Weiteren ist es im Rahmen der Erfindung denkbar, dass die Elektronikeinheit zumindest zwei Beleuchtungsmittel oder mehr aufweist, wobei insbesondere je Beleuchtungsmittel eine Lichtkappe vorhanden sein kann. Somit ist es durchaus denkbar, dass je Elektronikeinheit zumindest zwei Beleuchtungsmittel vorhanden sind, die von je einer Lichtkappe geschützt werden, bzw. dass jedes Beleuchtungsmittel innerhalb einer Lichtkappe geschützt angeordnet ist. Jedoch ist es auch denkbar, dass von einer Lichtkappe auch mehrere Beleuchtungsmittel gleichzeitig geschützt werden. Durch die getrennte Anordnung der Beleuchtungsmittel und der Lichtkappen je Elektronikeinheit ist es möglich, unterschiedliche Beleuchtungseffekte zu realisieren. So kann z. B. eine Lichtkappe mit Beleuchtungsmittel dazu dienen, eine Vorfeldbeleuchtung an einem Türgriff zu realisieren. Eine weitere Lichtkappe mit zumindest einem Beleuchtungsmittel kann ferner dazu geeignet sein, eine Griffmuldenbeleuchtung vorzunehmen. Außerdem kann ein Fahrzeug, an dem das erfindungsgemäße Elektronikmodul montiert ist, bei Nacht lichttechnisch in Szene gesetzt werden.

Die erfindungswesentliche Elektronikeinheit weist zumindest ein Sensorelement als elektrisches Bauelement auf. Dieses Sensorelement kann vorzugsweise als kapazitiver Sensor ausgestaltet sein. Ebenfalls ist es denkbar, dass die Elektronikeinheit als elektrisches Bauelement eine Antenne, ein Abschirmelement für die Antenne, einen Taster oder Schalter, einen Drucksensor, einen Piezosensor oder dergleichen aufweist. Damit die einzelnen elektrischen Bauteile funktionstechnisch miteinander verbunden werden können, kann eine Steuereinheit vorhanden sein, die als Mikrochip ausgestaltet sein kann. Ebenfalls kann auch ein Beschleunigungssensor oder ein Crashsensor bei der Elektronikeinheit vorhanden sein, wodurch z. B. ein Crash eines Fahrzeugs messtechnisch erfassbar ist, um z. B. eine Blockade des Türgriffs während des Crashs zu bewerkstelligen. Durch diese erfindungsgemäße Elektronikeinheit mit den zuvor genannten elektrischen Bauelementen kann insgesamt der Funktions- und Bedienungskomfort bei einem Türgriff deutlich erhöht werden, wobei ebenfalls auch die Sicherheit erhöht werden kann.

Bei dem bereits erwähnten Leiterelement kann zumindest ein Vorsprung vorhanden sein, an dem zumindest ein Beleuchtungsmittel elektrisch angeordnet ist. So kann z. B. dieser Vorsprung stegförmig aus dem übrigen Leiterelement herausragen, um eine quasi geometrische Abgrenzung zu bewirken. Dabei ist es denkbar, dass bis auf den stegförmigen Vorsprung das übrige Leiterelement mit Vergussmasse umgeben ist. Somit lässt sich eine einfache Trennung zwischen dem unteren Teil und dem oberen Teil der Leiterplatte herstellen. Dabei wird der obere Teil des Leiterelements bzw. der Elektronikeinheit quasi durch den Vorsprung mit dem Beleuchtungsmittel gebildet. Dieser Vorsprung bzw. das obere Teil ist eben nicht von Vergussmasse umgeben, damit das daran befestige Beleuchtungsmittel in der Lage ist, frei sein Licht auszustrahlen. Zu diesem Zweck umfasst die Lichtkappe auch den Vorsprung mit dem Beleuchtungsmittel, so dass der Vorsprung mit dem Beleuchtungsmittel im Innenraum der Lichtkappe angeordnet ist. Zu diesem Zweck ist es von Vorteil, wenn der Vorsprung in Form und Größe an das Beleuchtungsmittel angepasst ist, so dass der Vorsprung möglichst kleinflächig ausgestaltet ist. Auch sei an dieser Stelle erwähnt, dass das Leiterelement möglichst einteilig mit dem Vorsprung ausgestaltet ist. Das Leiterelement kann selbst als Leiterplatte, die eben oder gebogen ist, ausgestaltet sein. Auch ist eine stabile Leiterfolie oder eine flexible Leiterfolie als Leiterelement denkbar. Auch ist es denkbar, dass eine Elektronikeinheit mehr als ein Leiterelement aufweist, die z. B. über eine flexible Verbindung, wie z. B. eine Leiterfolie miteinander verbunden sind. Zweckmäßigerweise ist das Leiterelement mehrschichtig aufgebaut, so dass je nach Schicht Leiterbahnen in dem Leiterelement angeordnet sein können, wodurch ein Multilayer-Leiterelement realisierbar ist. Dieses Leiterelement ist besonders platzsparend, da die Leiterbahnen übereinander auf den jeweiligen Schichten angeordnet werden können.

Ferner ist es im Rahmen der Erfindung denkbar, dass das Elektronikmodul ein Gehäuse aufweist, wobei die Elektronikeinheit zumindest teilweise mit dem Leiterelement, den elektrischen Bauteilen und dem Beleuchtungsmittel innerhalb des Gehäuses angeordnet sind. Hierbei kann insbesondere ein Teil des Gehäuses durch die Lichtkappe gebildet sein, wobei es sich in der Regel um einen oberen Teil des Gehäuses handelt, das auch den oberen Teil der Elektronikeinheit umgibt und schützt. Das Elektronikmodul kann mit dem Gehäuse innerhalb eines Türgriffs angeordnet werden, wodurch eine vollständige Fertigung des Elektronikmoduls außerhalb eines Türgriffes realisierbar ist. Somit kann das Elektronikmodul vollständig gefertigt werden, erst recht, wenn der untere Teil der Elektronikeinheit im Gehäuse bereits mit Vergussmasse vergossen ist und die Lichtkappe bereits das vorhandene Beleuchtungselement schützt. Es sei an dieser Stelle grundsätzlich nochmal erwähnt, dass auch mehrere Beleuchtungsmittel mit mehrere Lichtkappen bei dem erfindungsgemäßen Elektronikmodul mit und ohne Gehäuse vorhanden sein können. Das Gehäuse kann nach oben hin offen ausgestaltet sein oder mit einem vollständigen Deckel als Oberteil des Gehäuses verschlossen sein. Hierzu kann zumindest eine Lichtkappe als Deckel des Gehäuses dienen. Allerdings muss die Lichtkappe nicht das Unterteil des Gehäuses vollständig verschließen, da dieses durch die Vergussmasse bereits erfolgen kann.

Sofern bei dem Elektronikmodul ein zusätzliches Gehäuse vorgesehen ist, kann zwischen dem Gehäuse des Elektronikmoduls und der Lichtkappe eine Verbindungslinie vorgesehen sein, die mit Vergussmasse abgedichtet ist. Dabei kann die Abdichtung von innen, gemeint ist von der Gehäuseseite, oder von außen, gemeint ist außerhalb der Gehäuseseite, durch Vergussmasse erfolgen. Auch ist es denkbar, dass die Lichtkappe das Unterteil des Gehäuses insbesondere vollständig verschließt. Dabei kann die Lichtkappe bspw. auf dem Unterteil des Gehäuses angeclipst werden, wobei eine Trennlinie (gemeint ist Verbindungslinie) zwischen Lichtkappe und dem Gehäuse bzw. dem Unterteil des Gehäuses durch Vergussmasse zusätzlich abgedichtet werden kann. Allerdings ist es auch denkbar, dass die Lichtkappe eben nicht das Gehäuse vollständig abdeckt. Hierbei schwimmt quasi die Lichtkappe auf der Vergussmasse, die dem unteren Teil der Elektronikeinheit und in dem Gehäuse angeordnet ist. Dabei ragt der Öffnungsrand der Lichtkappe in die Vergussmasse hinein, wodurch die Öffnung der Lichtkappe, durch die ein Vorsprung des Leiterelements ragt, an dem zumindest ein Beleuchtungsmittel angeordnet ist, vollständig zu verschließen. Sofern auf das zusätzliche Gehäuse bei dem Elektronikmodul verzichtet wird, kann die Elektronikeinheit auch in einer Ausnehmung im Türgriff angeordnet sein, die dann mit Vergussmasse verfüllt wird und auf der die Lichtkappe quasi schwimmt und mit dem Öffnungsrand in die Vergussmasse ragt.

Des Weiteren ist es erfindungsgemäß vorstellbar, dass die Lichtkappe über zumindest ein Halteelement mit dem Gehäuse und/oder der Elektronikeinheit und/oder dem Türgriff verbindbar ist. Hierbei kann das Haltemittel zumindest als Haltebügel, Halteklemme oder Rastmittel ausgestaltet sein. Dabei dient das Haltemittel dazu, die Lichtkappe beim Vergiessen der Elektronikeinheit mit Vergussmasse oberhalb der Elektronikeinheit zu fixieren, damit diese nicht aufschwimmt, wenn sie mit der Vergussmasse in Kontakt gerät. Nachdem die Vergussmasse erstarrt ist, wird die Lichtkappe zusätzlich oder auch ausschließlich durch die Vergussmasse an der Elektronikeinheit gehalten. Das Haltemittel kann dabei ebenfalls eingegossen werden, wobei es auch denkbar ist, dass das Haltemittel nur als temporäres Haltemittel dient, bis die Vergussmasse erstarrt ist und die Lichtkappe durch die ausgehärtete Vergussmasse fixiert ist. Auch ist es denkbar, dass das Haltemittel direkt an der Lichtkappe, z. B. als Rastnase angeordnet ist. Ebenfalls kann das Haltemittel auch an der Elektronikeinheit oder dem Türgriff oder dem Gehäuse befestigt sein und mit diesen Bauelementen eine Einheit bilden, um die Lichtkappe örtlich beim Vergiessen der Elektronikeinheit zu fixieren.

Des Weiteren kann es vorgesehen sein, dass die Lichtkappe mit dem Gehäuse für die Elektronikeinheit eine Labyrinthdichtung bildet, so dass das gesamte Gehäuse, in dem die Elektronikeinheit eingeschlossen ist, bereits durch eine Kombination des Gehäuses mit der Lichtkappe und der vorgesehenen Labyrinthdichtung abgedichtet ist. Zusätzlich ist es denkbar, dass zunächst die Elektronikeinheit, innerhalb des Gehäuses fixiert wird, z. B. durch ein weiteres Haltemittel, was bspw. am Gehäuse angespritzt ist, und anschließend die Elektronikeinheit mit Vergussmasse soweit umhüllt wird, dass zumindest noch ein Vorsprung für das Beleuchtungselement von dem Leiterelement aus der Vergussmasse herausragt. In die noch nicht erstarrte Vergussmasse kann dann die Lichtkappe ragen, indem sie z. B. innenseitig mit dem Gehäuse verrastet. Somit ist die Verbindungslinie, die auch gleichzeitig den Öffnungsrand der Lichtkappe bildet, ebenfalls mit der Vergussmasse versehen, so dass nach dem Erstarren der Vergussmasse das Gehäuse hundertprozentig abgedichtet ist. Dabei kann die Vergussmasse wie zuvor erwähnt von innen in dem Gehäuse angeordnet sein. Auch ist es denkbar, dass die Vergussmasse von außen das Gehäuse abdichtet, dies ist insbesondere dann einfach möglich, wenn das Elektronikmodul innerhalb einer Ausnehmung des Türgriffs angeordnet ist. Wie zuvor bereits erwähnt worden ist, ist es denkbar, dass die Elektronikeinheit in einer Ausnehmung im Türgriff anordbar ist. Hierbei kann die Elektronikeinheit zumindest teilweise durch die Vergussmasse in der Ausnehmung fixiert sein. Dabei spielt es keine Rolle, ob die Elektronikeinheit mit einem zusätzlichen Gehäuse ausgestattet ist oder nicht. Sofern eine Elektronikeinheit mit Gehäuse zum Einsatz kommt, kann diese bereits durch eine Vergussmasse gehäuseinnenseitig abgedichtet sein. Zusätzlich oder optional kann auch eine Gehäuseaußenabdichtung erfolgen, da die Elektronikeinheit in einer Ausnehmung des Türgriffs anordbar ist. Wie auch bereits erwähnt worden ist, ist dabei vorzugsweise das Beleuchtungsmittel frei von Vergussmasse unterhalb der Lichtkappe an einem Vorsprung des Leiterelements angeordnet.

Des Weiteren ist die vorliegende Erfindung auch auf einen Türgriff für ein Fahrzeug, insbesondere einen Fahrzeugtürgriff, zum Öffnen und/oder Schließen eines beweglichen Teils, wie z. B. einer Tür, Klappe oder dergleichen, gemäß des Oberbegriffs von Anspruch 13 gerichtet. Dabei ist es vorgesehen, dass wenigstens eine Lichtkappe vorhanden ist, die zumindest ein Beleuchtungsmittel vor äußeren Einflüssen schützt, und die Lichtkappe das vom Beleuchtungsmittel ausgestrahlte Licht zu einer Außenseite des Türgriffs weiterleitet, wobei die Lichtkappe durch eine Vergussmasse verschlossen ist. In diesem Fall wirkt die Lichtkappe auch als Lichtleiter, da sie das vom Beleuchtungsmittel ausgestrahlte Licht aus dem Innenbereich des Türgriffs zur Außenseite des Türgriffs transportiert und dort an einer Lichtaustrittsfläche ausstrahlt.

Ferner sei erwähnt, dass bei dem erfindungsgemäßen Türgriff auch das erfindungsgemäße Elektronikmodul mit den zuvor beschriebenen technischen Merkmalen, insbesondere aus den Ansprüchen 1 bis 12, vorgesehen sein kann. Hierbei ist es denkbar, dass die Lichtkappe eine Lichtaustrittsfläche aufweist, die bündig mit der Außenseite des Türgriffs ausgestaltet ist. Somit integriert sich die Lichtaustrittsfläche der Lichtkappe vollständig an der Außenseite des Türgriffs, wodurch ein optisch wohlgefälliger Eindruck entsteht. Außerdem ist es möglich, somit die Lichtaustrittsfläche unabhängig von der Anordnung des Beleuchtungsmittels innerhalb des Türgriffs vorzusehen. Idealerweise sind mehrere Lichtaustrittsflächen von einer oder mehreren Lichtkappen an der Außenseite des Türgriffs vorgesehen, wodurch eine Vorfeldbeleuchtung und eine Griffmuldenbeleuchtung und eventuell weitere Beleuchtungseffekte realisierbar sind. Die Lichtaustrittsfläche kann an einem Ende eines Leuchtvorsprungs der Lichtkappe vorgesehen sein und ist vorzugsweise materialeinheitlich und monolithisch mit der Lichtkappe ausgestaltet.

Bei dem erfindungsgemäßen Türgriff ist es ferner vorgesehen, dass der Türgriff zumindest ein Unterteil mit einer Ausnehmung aufweist, in der zumindest teilweise das Elektronikmodul angeordnet und mit Vergussmasse vergossen ist, wobei ein Vorsprung des Leiterelements aus der Vergussmasse herausragt, an dem zumindest ein Beleuchtungsmittel elektrisch angeordnet ist und insbesondere befestigt sein kann. Hierbei schützt die Lichtkappe das Beleuchtungsmittel vor äußeren Einflüssen und eine Öffnung der Lichtkappe ist ebenfalls von der Vergussmasse verschlossen. Wie bereits erwähnt, kann die Vergussmasse direkt in der Ausnehmung des Unterteils vom Türgriff angeordnet sein, um von außen das Elektronikmodul zu umgeben und abzudichten. Des Weiteren ist es erfindungsgemäß möglich, dass direkt oder indirekt, insbesondere zwischen einem Sensorelement des Elektronikmoduls oder des Elektronikmoduls selbst, und einer Innenseite des Türgriffs ein Füllpad, insbesondere ein Feuchtigkeitspad, anordbar ist, um eine Feuchtigkeit innerhalb des Füllpads zuverlässig zu vermeiden. Durch den Einsatz des Füllpads kann sichergestellt werden, dass die Messfunktion, insbesondere des Sensorelements bzw. des Elektronikmoduls nicht durch Feuchtigkeit beeinflusst wird. Gerade bei einem kapazitiven Sensor als Sensorelement ist dieses von wesentlicher Bedeutung, da ansonsten der entsprechende Sensor keine exakten Messdaten liefert. Selbstverständlich können auch mehrere Füllpads beim erfindungsgemäßen Türgriff vorgesehen sein. Durch den Einsatz der Füllpads kann auch die notwendige Menge an Vergussmasse deutlich reduziert werden. Als Füllpads können z. B. Silikonpads oder Schaumstoffpads mit einer geschlossenen Oberfläche zum Einsatz kommen, die keine Feuchtigkeit aufnehmen können.

Des Weiteren ist die vorliegende Erfindung auch auf ein Verfahren zum Herstellen eines Türgriffs nach dem Oberbegriff von Anspruch 15 gerichtet. Hierbei sieht das erfindungsgemäße Verfahren die folgenden Schritte vor:
a) Anordnen des Elektronikmoduls in einem Unterteil des Türgriffs und/oder einem Gehäuse
b) Teilweise Vergiessen des Elektronikmoduls mit Vergussmasse, wobei zumindest ein Vorsprung des Leiterelementes aus der Vergussmasse, an dem zumindest das Beleuchtungsmittel angeordnet ist, herausragt
c) Teilweise Eintauchen der Lichtkappe in die noch nicht erstarrte Vergussmasse, wobei die Öffnung der Lichtkappe vollständig in die Vergussmasse ragt.

Beim Schritt a) kann zusätzlich eine Fixierung des Elektronikmoduls im Türgriff oder dem Gehäuse vorgesehen sein. Auch können die Schritte a), b) und c) in zeitlicher Reihenfolge nacheinander ablaufen, wobei es jedoch auch denkbar ist, dass die Schritte teilweise zeitlich gleichzeitig oder überlappend erfolgen können. So ist es z. B. denkbar, dass die Lichtkappe über ein Haltemittel oberhalb der Elektronikeinheit angeordnet wird und dann erst Schritt b) erfolgt, in dem die Elektronikeinheit durch Vergussmasse vergossen wird. Auch ist es denkbar, dass zunächst der Schritt b) erfolgt und dann die Lichtkappe in die noch nicht erstarrte Vergussmasse mit ihrem Öffnungsrand eingetaucht wird, bis die Vergussmasse erstarrt. Hierzu kann das bereits erwähnte Haltemittel zur Fixierung der Lichtkappe verwendet werden.

Weitere Maßnahmen und Vorteile der vorliegenden Erfindung ergeben sich aus den Ansprüchen, der nachfolgenden Beschreibung und den Zeichnungen. Ebenfalls gelten die offenbarten Merkmale aus der erfindungsgemäßen Vorrichtung auch für das erfindungsgemäße Verfahren und umgekehrt. In den Zeichnungen ist die Erfindung in unterschiedlichen Ausführungsbeispielen dargestellt. Dabei können die in den Ansprüchen und in der Beschreibung erwähnten Merkmale jeweils einzeln für sich oder in beliebiger Kombination erfindungswesentlich sein. Es zeigen:
- Figur 1: eine dreidimensionale Ansicht eines erfindungsgemäßen Türgriffs mit drei beispielhaft angeordneten Lichtkappen und den jeweiligen Lichtaustrittsflächen an der Außenseite des Türgriffs,
- Figur 2: eine dreidimensionale Ansicht auf ein Unterteil eines erfindungsgemäßen Türgriffs, an dem beispielhaft drei Ausnehmungen für drei Lichtkappen vorgesehen sind,
- Figur 3: eine Draufsicht auf ein erfindungsgemäßes Elektronikmodul, mit zumindest einem Beleuchtungsmittel,
- Figur 4: ein Querschnitt durch einen erfindungsgemäßen Türgriff, insbesondere aus Figur 1 mit einer Lichtkappe und einer integrierten Linse,
- Figur 5: ein weiterer beispielhafter Querschnitt aus einem erfindungsgemäßen Türgriff aus Figur 1, wobei jedoch die Lichtkappe ein integriertes Haltemittel aufweist,
- Figur 6: ein weiterer Querschnitt durch einen erfindungsgemäßen Türgriff aus Figur 1 mit einer optional ausgestalteten Lichtkappe,
- Figur 7: ein weiterer Querschnitt durch einen erfindungsgemäßen Türgriff aus Figur 1 mit einem erfindungsgemäßen Elektronikmodul mit einem Gehäuse und einer optional ausgestalteten Lichtkappe als Gehäusedeckel,
- Figur 8: eine dreidimensionale Ansicht einer Lichtkappe,
- Figur 9: eine Draufsicht auf ein erfindungsgemäßes Elektronikmodul mit Lichtkappe und Vergussmasse ohne Türgriff und
- Figur 10: ein erfindungsgemäßes Fahrzeug mit erfindungsgemäßen Türgriffen.

In den nachfolgenden Figuren werden für die gleichen technischen Merkmale auch von unterschiedlichen Ausführungsbeispielen die identischen Bezugszeichen verwendet.

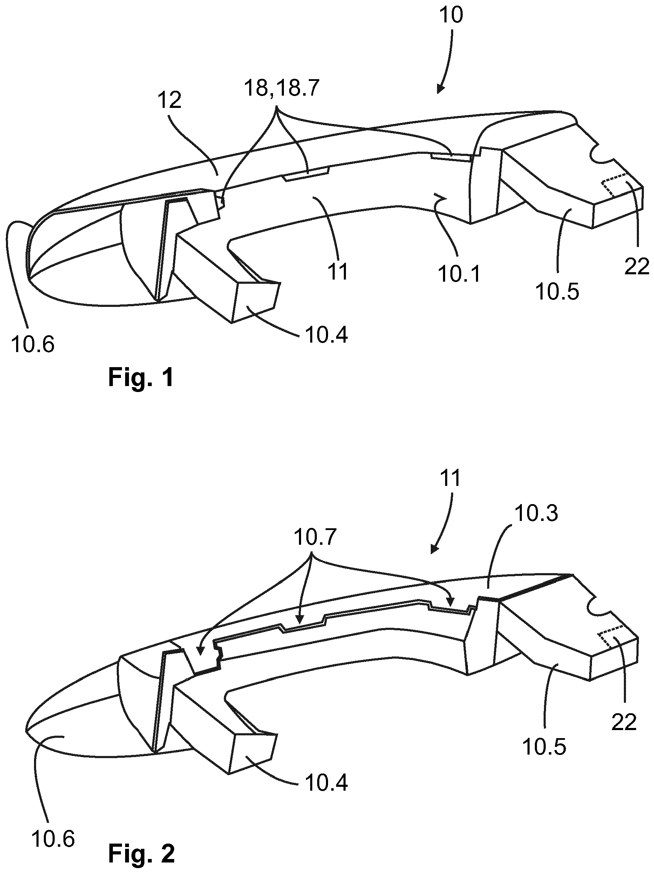

In der Figur 1 ist ein erfindungsgemäßer Türgriff 10 in dreidimensionaler Ansicht dargestellt. Dieser Türgriff 10 weist zumindest ein Unterteil 11 und ein Oberteil 12 auf. Ferner ist am Türgriff 10 eine Ausnehmung 10.3 vorgesehen, die weitestgehend im Unterteil 11 angeordnet ist. Derartige Türgriffe 10 sind bspw. zum Öffnen und Schließen eines beweglichen Teils 101 bei einem Fahrzeug 100 vorgesehen. Das bewegliche Teil kann dabei eine Tür, Seitentür, Heckklappe, Motorhaube oder dergleichen umfassen. Durch den verwendeten Türgriff 10 soll insbesondere der Komfort beim Öffnen und Schließen des beweglichen Teils 101 verbessert werden. Hierzu ist der Türgriff 10 datentechnisch an ein fahrzeugseitiges System 102, insbesondere ein Sicherheitssystem angeschlossen. Dabei kann eine bidirektionale Datenverbindung zwischen dem Türgriff 10 und dem fahrzeugseitigen Sicherheitssystem 102 vorhanden sein. Diese kann drahtlos oder aber über ein Kabel über einen Stecker 22 am Türgriff 10 erfolgen. Der entsprechende Stecker 22 ist am Türgriff 10 an einem Lagerelement 10.5 in den Figuren 1 und 2 angedeutet. Der Türgriff 10 wird über den Mitnehmer 10.4 und das Lagerelement 10.5 außenseitig am Fahrzeug 100 gehalten. Hierzu ist innenseitig am beweglichen Teil 101 ein Trägerelement vorgesehen, welches in den dargestellten Figuren jedoch nicht gezeigt ist. Über den Mitnehmer 10.4 vom Türgriff 10 kann eine Bewegung des Türgriffs 10 auf einen Verstellmechanismus am Trägerelement erfolgen. Hierzu ist der Türgriff 10 über das Lagerelement 10.5 am Trägerelement dreh- oder schwenkbar gelagert. Ferner weist der dargestellte Türgriff 10 aus Figur 1 und 2 beispielhaft eine Kappe 10.6 auf, hinter der ein Schließzylinder für das bewegliche Teil 101 angeordnet werden kann. Zu diesem Zweck kann die Kappe mit einer Durchgangsbohrung versehen sein, damit der Schließzylinder mit einem Schlüssel erreichbar ist. Auch ist es denkbar, dass die Kappe 10.6 abnehmbar ausgestaltet ist, um nur in einem Bedarfsfall an den Schließzylinder mit einem Schlüssel gelangen zu können. Wie gut bei dem Türgriff aus Figur 1 zu erkennen ist, sind beispielhaft drei Lichtkappen 18 von dem Elektronikmodul 20 vorhanden, wobei bei dem montierten Türgriff 10 nur die Lichtaustrittsflächen 18.7 zu erkennen sind. Wie in Figur 1 angedeutet, sind dabei die Lichtkappen über die Längserstreckung des Türgriffs 10 im Bereich der Eingriffsmulde des Türgriffs 10 verteilt. Hierbei ist die erste Lichtkappe 18 im Längsbereich des Türgriffs 10 vom Mitnehmer 10.4 angeordnet, die mittlere Lichtaustrittsfläche 18.7 ist ungefähr mittig im Längsbereich des Türgriffs 10 vorgesehen, und die letzte Lichtaustrittsfläche 18.7 ist im Längsbereich des Türgriffs 10 am Lagerelement 10.5 vorgesehen. Durch diese drei unterschiedlich angeordneten Lichtaustrittsflächen 18.7 kann zumindest eine Vorfeldbeleuchtung und eine Griffmuldenbeleuchtung des Türgriffs 10 erreicht werden. Auch sei an dieser Stelle erwähnt, dass genau eine Lichtkappe 18 drei unterschiedliche Lichtaustrittsflächen 18.7 aufweisen kann, wie bspw. in Figur 1 gezeigt ist.

In der Figur 2 ist nur das Unterteil 11 vom Türgriff 10 (insbesondere aus Figur 1) beispielhaft dargestellt. Hierbei fehlt das Oberteil 12, welches die vorhandene Ausnehmung 10.3 vom Türgriff 10 abdeckt. Diese Ausnehmung 10.3 ist zur geometrischen Anordnung des erfindungsgemäßen Elektronikmoduls 20 vorgesehen. Gut zu erkennen sind auch drei Öffnungen 10.7 für die drei zuvor beschriebenen Lichtaustrittsflächen 18.7 des Elektronikmoduls 20. Vorzugsweise werden diese Öffnungen 10.7 durch die Lichtkappen 18 derart ausgefüllt, dass die Lichtaustrittsflächen 18.7 bündig mit der übrigen Außenseite 10.1 vom Türgriff 10 enden. Damit integrieren sich die verwendeten Lichtkappen 18 wohlgefällig im Türgriff 10. Es sei an dieser Stelle auch erwähnt, dass für jede Lichtaustrittsfläche 18.7 eine unterschiedliche Lichtkappe 18 vorgesehen sein kann, die für unterschiedliche Beleuchtungsmittel16 vom Elektronikmodul 20 vorgesehen sein können. Diese Beleuchtungsmittel 16 können auch unterschiedlich farbiges Licht aussenden. Auch ist ein Farbwechsel je Beleuchtungsmittel 16 vorstellbar.

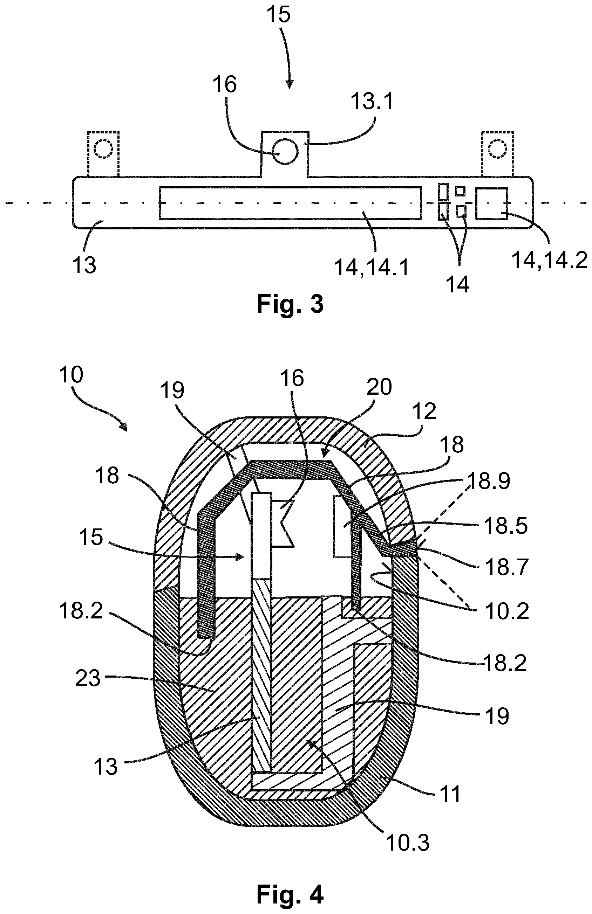

In die Ausnehmung vom Türgriff 10 kann das erfindungsgemäße Elektronikmodul 20 eingesetzt werden. Dabei kann das gesamte Elektronikmodul 20 bereits mit Vergussmasse 23 vergossen sein. Auch ist es denkbar, dass dieses Elektronikmodul mit einem Gehäuse 21 ausgestattet ist und in die Ausnehmung 10.3 eingesetzt wird. Ebenfalls ist es vorstellbar, dass jedoch das Elektronikmodul 20 gehäusefrei direkt in die Ausnehmung 10.3 vom Türgriff 10 eingesetzt wird und erst dort mit Vergussmasse 23 vergossen wird, um es somit vor äußeren Einflüssen besonders schützen zu können. In den beispielhaften Ausführungen des Türgriffs 10 aus den Figuren 4 bis 7 sind unterschiedliche Varianten der Erfindung dargestellt, wobei im Folgenden noch näher auf die einzelnen Unterschiede eingegangen wird.

In der Figur 3 ist eine Elektronikeinheit 15 des erfindungsgemäßen Elektronikmoduls 20 gehäuselos und ohne Vergussmasse 23 dargestellt. Bei diesem Elektronikmodul 20 ist zur besseren Übersicht auch nicht die wesentliche Lichtkappe 18 eingezeichnet. Dabei weist die Elektronikeinheit 15 ebenfalls eine Längserstreckung auf, die im Wesentlichen an die Ausnehmung 10.3 vom Türgriff 10 angepasst ist. Die geometrische Form der Elektronikeinheit 15 wird im Wesentlichen durch ein Leiterelement 13 vorgegeben, an dem elektronische Bauteile 14, als ein Sensorelement 14.1, und wie z.B. J ein Mikrochip 14.2 und/oder eine Antenne oder dergleichen, angeordnet und elektronisch untereinander verbunden sind. Zwar weist das Leiterelement 13 eine Längserstreckung auf, jedoch ist aus der Figur 3 nicht ersichtlich, dass dieses Leiterelement 13 auch gebogen sein kann. Als Leiterelement 13 kann hierbei eine starre Leiterplatte (auch in gebogener Form und auch eben) sowie eine Leiterfolie oder eine Kombination vorhanden sein. Die Elektronikeinheit weist einen unteren Teil und einen oberen Teil auf, wobei der obere Teil im Wesentlichen durch einen Vorsprung 13.1 an dem Leiterelement 13 gebildet wird. In dem vorliegenden Fall ist nur ein mittiger Vorsprung 13.1 über die Längserstreckung des Leiterelements 13 angeordnet. An diesem Vorsprung 13.1 ist zumindest ein Beleuchtungsmittel 16 vorgesehen, um das erforderliche Licht der Elektronikeinheit 15 bzw. des erfindungsgemäßen Moduls 20 ausstrahlen zu können. Optional sind in der Figur 3 links- und rechtsseitig zwei weitere Vorsprünge 13.1 am Leiterelement 13 gestrichelt dargestellt, die jeweils auch ein Beleuchtungsmittel 16 aufnehmen bzw. befestigen können. Ein derartiges Elektronikmodul 20 mit insgesamt drei, insbesondere über die Länge gleichmäßig verteilten, Vorsprüngen 13.1 mit jeweiligen Beleuchtungsmitteln 16 kann bei dem Türgriff 10 aus Figur 1 zum Einsatz kommen. Auch können je Vorsprung 13.1 auch mehrere Beleuchtungsmittel 16 zum Einsatz kommen, die auf der Vorder- und Rückseite des Leiterelements 13 anordbar sind. Erfindungsgemäß werden diese Vorsprünge 13.1 mit den jeweiligen Beleuchtungsmitteln 16 durch eine gemeinsame oder mehrere getrennte Lichtkappen 18 geschützt, wobei die Lichtkappen quasi die Vorsprünge 13.1 umgeben. In der Figur 3 sind noch die einzelnen elektrischen Bauelemente 14, wie z. B. das langgezogene Sensorelement 14.1, welches als kapazitiver Sensor ausgestattet sein kann, dargestellt. Dabei können diese Bauelemente 14 beidseitig an dem Leiterelement 13 angeordnet bzw. angelötet sein. Der kapazitive Sensor 14.1 kann dabei als Näherungssensor dienen, wobei er zu einer Fahrzeugtür hin oder von der Fahrzeugtür weg gerichtet sein kann. Auch können zwei oder mehrere kapazitive Näherungssensoren 14.1 bei der Elektronikeinheit 15 vorhanden sein.

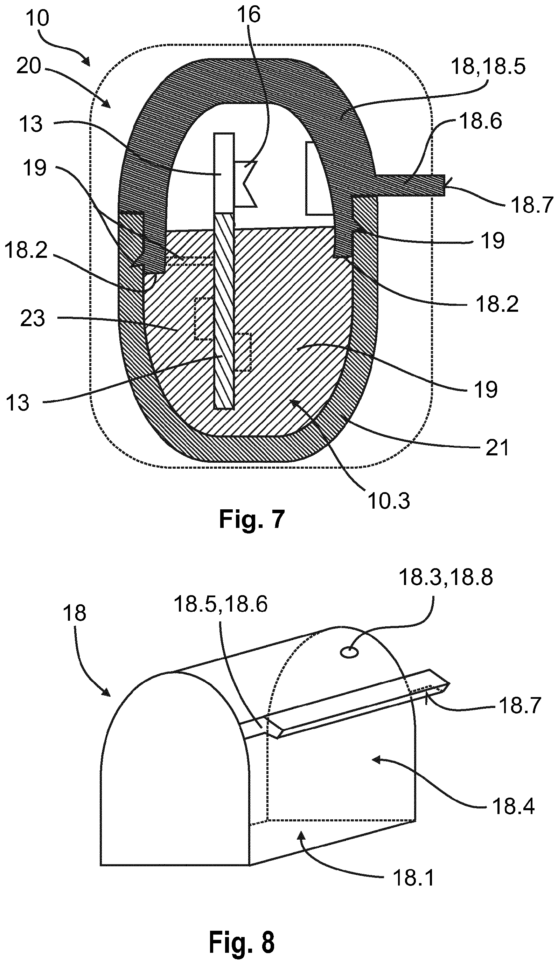

In der Figur 4 ist ein erfindungsgemäßer Türgriff 10 in einer Querschnittsdarstellung gezeigt. Dabei ist der Türgriff kurz vor einem Vorsprung 13.1 der Elektronikeinheit 15 geschnitten. Als Elektronikeinheit 15 kommt ein Elektronikmodul 20 ohne ein Gehäuse 21 zum Einsatz. Dabei ist die Elektronikeinheit 15 direkt in einer Ausnehmung 10.3 angeordnet. Um das Elektronikmodul 20 innerhalb dieser Ausnehmung 10.3 fixieren zu können, sind zusätzliche Haltemittel 19 vorgesehen. Dabei ist z. B. ein im Wesentlichen L-förmiges Haltemittel 19 im Unterteil 11 vorgesehen. Dieses Haltemittel kann an dem Türgriff 10, dem Elektronikmodul 20 oder einem optional vorgesehenen Gehäuse 21, angeordnet und ggf. daran befestigt sein. Im Wesentlichen dienen diese Haltemittel dazu, das Elektronikmodul 20 insbesondere vor dem Vergießen mit Vergussmasse 23 in der Ausnehmung 10.3 zu fixieren. Nach dem Vergießen des Elektronikmoduls 20 fixiert die Vergussmasse 23 das Elektronikmodul auch mechanisch derart fest, dass auf zusätzliche Haltemittel 19 verzichtet werden könnte. Wie anhand der Figur 4 gut zu erkennen ist, wird die Elektronikeinheit 15 mit dem Leiterelement 13 ungefähr bis zum Vorsprung 13.1 des Leiterelements 13 durch Vergussmasse 23 vergossen. Dabei ragt im Wesentlichen nur der Vorsprung 13.1 mit dem daran befestigen Beleuchtungsmittel 16 aus der Vergussmasse 23 heraus. Dieses herausragende Beleuchtungsmittel 16 wird durch die übergestülpte Lichtkappe 18 geschützt. Dabei weist die Lichtkappe 18 eine untere Öffnung 18.1 auf, die in der Vergussmasse 23 endet. Die Öffnung 18.1 der Lichtkappe 18 weist einen Öffnungsrand 18.2 auf, der vollständig in der Vergussmasse 23 angeordnet ist. Beispielhaft ist in der Figur 8 eine erfindungswesentliche Lichtkappe 18 in dreidimensionaler Darstellung gezeigt. Diese Lichtkappe kann auch quasi als umgekehrte Schüssel oder nach unten hin offener Quader oder dergleichen ausgestaltet sein. Wichtig ist jedoch, dass die Lichtkappe 18 das Beleuchtungsmittel 16 im montierten Zustand vollständig umgibt und die Öffnung 18.1 der Lichtkappe 18 durch die eingesetzte Vergussmasse 23 verschlossen ist. Dabei ist es auch denkbar, dass der Öffnungsrand 18.2 auf das hineinragende Leiterelement 13, insbesondere den Vorsprung 13.1 geometrisch angepasst ist, und hierzu eine Dichtung vorgesehen ist, so dass quasi die Lichtkappe 18 selbstständig ohne Vergussmasse 23 das Beleuchtungsmittel 16 vollständig vor äußeren Einflüssen abschirmt. Wie in Figur 4 weiter zu erkennen ist, ist auch ein oberes Haltemittel 19 als Querstütze ausgestaltet, die an einer Innenseite 10.2 aus dem Oberteil 12 herausragt und das Leiterelement 13 abstützt. Ferner weist die Lichtkappe 18 an seiner Innenseite eine Linse 18.9 auf, die gegenüber dem Beleuchtungsmittel 16 an der Lichtkappe 18 angeordnet bzw. daran integriert ist. Diese Linse 18.9 kann zum Fokussieren oder Streuen des ausgesendeten Lichts des Beleuchtungsmittels 16 dienen. Das ausgesendete Licht wird dabei weiter über die Lichtkappe 18, insbesondere den vorgesehenen Lichtleiter 18.5, der als Leuchtvorsprung 18.6 ausgestaltet ist, an die Lichtaustrittsfläche 18.7 weitergeleitet. Von der Lichtaustrittsfläche 18.7 wird das Licht dann vom Beleuchtungsmittel 16 außerhalb des Türgriffs 10 ausgestrahlt, wie gestrichelt angedeutet. Die Lichtkappe 18 kann zur besseren Fixierung ebenfalls an dem Haltemittel 19 angeordnet bzw. aufgestellt werden. Zu diesem Zweck ist es von Vorteil, wenn die Lichtkappe 18 zumindest bereichsweise oder sogar vollständig aus lichtdurchlässigem Material ausgestaltet ist, wie bereits erwähnt worden ist.

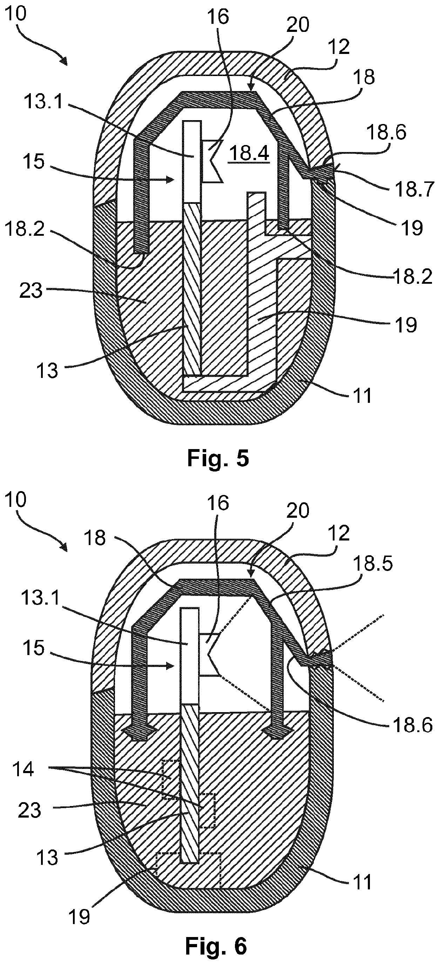

Der erfindungsgemäße Türgriff 10 aus Figur 5 unterscheidet sich im Wesentlichen durch den Türgriff 10 aus Figur 4 durch die unterschiedlich ausgestaltete Lichtkappe 18 sowie das fehlende Haltemittel 19 vom Oberteil 12 des Türgriffs 10 für das erfindungsgemäße Elektronikmodul 20. Dabei ist die Lichtkappe 18 in Figur 5 ohne eine zusätzliche Linse 18.9 ausgestaltet, so dass das ausgesendete Licht vom Beleuchtungsmittel 16 direkt über den Lichtleiter 18.5, der stegförmig ausgestaltet sein kann, an die Lichtaustrittsfläche 18.7 weitergeleitet wird. Ferner weist die Lichtkappe 18 direkt ein Haltemittel 19 in Form eines Vorsprungs auf, der im Bereich der Lichtaustrittsfläche 18.7 am Leuchtvorsprung 18.6 angeordnet ist. Dieser Vorsprung der Lichtkappe 18 greift in eine randseitige Ausnehmung des Unterteils 11 vom Türgriff 10, um die Lichtkappe 18 somit fixieren zu können. Hierbei ist die Fertigung des erfindungsgemäßen Türgriffs 10 besonders einfach, da zunächst nur das Elektronikmodul 20 ohne Gehäuse 21 in der Ausnehmung 10.3, vorzugsweise an dem Haltemittel 19 angeordnet werden muss. Anschließend kann die Lichtkappe 18 mit ihrem integrierten Haltemittel 19 an den Rand des Unterteils 11 vom Türgriff 10 aufgesteckt werden und das gesamte Elektronikmodul 20 in der Ausnehmung 10.3 vom Türgriff 10 vergossen werden, bis zumindest der Öffnungsrand 18.2 der Lichtkappe 18 vollständig mit Vergussmasse versehen ist. Es sei auch erwähnt, dass es auch denkbar ist, dass zunächst das Elektronikmodul 20 in der Ausnehmung 10.3 vergossen wird und dann die Lichtkappe 18 in die noch flexible Vergussmasse 23 gesetzt wird, wobei das integrierte Haltemittel 19 der Lichtkappe 18 zur Fixierung dienen kann. Sobald die Vergussmasse 23 erstarrt ist, ist die Lichtkappe 18 ausreichend am Türgriff 10 befestigt. Anschließend kann das Oberteil 12 auf das vorgefertigte Unterteil 11 mit dem Elektronikmodul 20 aufgesetzt werden, wodurch der Türgriff 10 fertiggestellt wird.

In der Figur 6 kommt ein andersartig ausgestaltetes Haltemittel 19 als das bisher L-förmige ausgestaltete Haltemittel 19 aus den Figuren 4 und 5 innerhalb des Unterteils 11 vom Türgriff 10 zum Einsatz. Dabei ist das in Figur 6 ausgestaltete Haltemittel 19 blockartig mit einer Aufnahmenut für das Leiterelement 13 ausgestaltet, um somit das Elektronikmodul 20 innerhalb des Türgriffs 10 vorzufixieren. Auch die Lichtkappe 18 weist einige Unterschiede zu der Lichtkappe 18 aus den Figuren 4 und 5 auf. Dabei sind im Bereich des Öffnungsrands 18.2 der Lichtkappe 18 aus Figur 6 keilförmige Vorsprünge vorhanden, wodurch die Lichtkappe 18 besser in der Vergussmasse 23 fixiert werden kann. Nach dem Erstarren der Vergussmasse 23 ist die Lichtkappe 18 nur durch Zerstörung entweder der Lichtkappe 18 selbst oder der Vergussmasse 23 aus diesem Verbund lösbar. Auch ist der Leuchtvorsprung 18.6 im Bereich der Lichtaustrittsfläche 18.7 keilförmig ausgestaltet und kann mit einer Labyrinthdichtung des Öffnungsrands vom Ober- und/oder Unterteil 11, 12 vom Türgriff 10 zusammenwirken.

In der Figur 7 kommt ein Elektronikmodul 20 zum Einsatz, welches mit einem zusätzlichen Gehäuse 21 versehen ist. Dabei dient die erfindungswesentliche Lichtkappe 18 als Deckelelement für das Gehäuse 21, in dem die Elektronikeinheit 15 vollständig angeordnet ist. Zusätzlich kann die Elektronikeinheit 15 bis auf die herausragenden Vorsprünge 13.1, an dem die Beleuchtungsmittel 16 angeordnet sind, mit Vergussmasse 23 vergossen werden. So ist es bspw. denkbar, dass das Leiterelement 13 über ein stegförmiges Haltemittel 19 mit der Lichtkappe 18 verbunden ist. So kann zunächst in die Ausnehmung 10.3 vom Unterteil 11 des Türgriffs 10 Vergussmasse 23 eingegossen werden und anschließend die Lichtkappe 18 mit der über das Haltemittel 19 angeordneten Elektronikeinheit 15 auf das Unterteil 11 bzw. in das Unterteil 11 eingesetzt werden. Dabei ist es denkbar, dass wieder die Öffnung 18.1 die Lichtkappe 18 mit ihrem Öffnungsrand 18.2 in die Vergussmasse 23 ragt, die zu diesem Zweck noch flüssig sein muss, wenn die Lichtkappe 18 aufgesetzt wird. Zusätzlich können an der Lichtkappe 18 Rastmittel vorgesehen sein, die als Haltemittel 19 zur Befestigung der Lichtkappe 18 an dem Gehäuse 21 dienen. Nach dem Erstarren der Vergussmasse 23 innerhalb des Gehäuses 21 ist das gesamte Elektronikmodul 20 optimal gegen äußere Einflüsse geschützt und kann in den Türgriff 10 eingesetzt werden. Hierbei ist es denkbar, dass der Türgriff selber auch noch einmal mit Vergussmasse 23 ausgegossen wird. Auch ist es denkbar, dass der Türgriff 10 bei einem Einsatz eines Gehäuses 21 für das Elektronikmodul 20 nur von außen mit Vergussmasse 23 vergossen wird. In der Figur 7 ist zur schematischen Verdeutlichung der Türgriff 10 gestrichelt dargestellt. Außerdem ist beispielhaft die Lichtkappe 18 mit einer Linse 18.9 innenseitig ausgestaltet.

In der Figur 8 ist ausschließlich die Lichtkappe 18 in dreidimensionaler Ansicht dargestellt. Diese hat quasi die Grundform einer Brottruhe mit einem auslegenden Element. Dabei ist die Lichtkappe nach unten hin durch die Öffnung 18.1 geöffnet. Zusätzlich kann ein Lüftungsloch 18.3 vorhanden sein, welches mit einem Verschlussmittel 18.8 in Form eines Stopfens oder dergleichen verschlossen werden kann. Das Lüftungsloch 18.3 dient dabei dazu einen möglichen entstehenden Überdruck beim Vergießen entweichen zu lassen, wenn nämlich die Vergussmasse 23 von unten in der Öffnung 18.1 der Lichtkappe 18 ansteigt. Nach dem Verschließen der Öffnung 18.1 durch die Vergussmasse 23 kann das Verschlussmittel 18.8 das Lüftungsloch 18.3 verschließen. Allerdings muss deutlich herausgestellt werden, dass das Lüftungsloch 18.3 mit dem Verschlussmittel 18.8 rein optionale Merkmale und nicht zwingend erforderlich sind, da es sich bei der Fertigung herausgestellt hat, dass der Innendruck innerhalb der Lichtkappe 18 nur marginal ansteigt und die Stabilität des Materials und der Konstruktion der Lichtkappe 18 diesen leichten Überdruck deutlich standhält. Ferner ist an der Außenseite der Lichtkappe 18 der Lichtleiter 18.5 als Leuchtvorsprung 18.6 angeordnet, der steg- bzw. winkelförmig ausgestaltet ist und in der Lichtaustrittsfläche 18.7 endet. Dabei dienen der Lichtleiter 18.5, der Leuchtvorsprung 18.6 und die Lichtaustrittsfläche 18.7 ausschließlich zum Weiterleiten des ausgesendeten Lichtes vom Beleuchtungsmittel 16. Nur zum Verständnis sei erwähnt, dass die beiden Stirnseiten, die unten rechteckig und unten bogenförmig ausgestaltet sind, die Lichtkappe 18 seitlich verschließen. Auch ist es zweckmäßig, dass die Lichtkappe 18 als ein monolithisch ausgestaltetes Bauteil hergestellt wird. Dieses kann z. B. durch Spritzguss-Gießen erfolgen. Idealerweise handelt es sich bei dem Material der Lichtkappe 18 um durchsichtiges Kunststoffmaterial, wie bereits zuvor eingehend erwähnt worden ist. Auch kann die Lichtkappe 18 aus Glas oder einer Kombination von Materialien, die idealerweise stoffschlüssig miteinander verbunden sind, hergestellt werden.

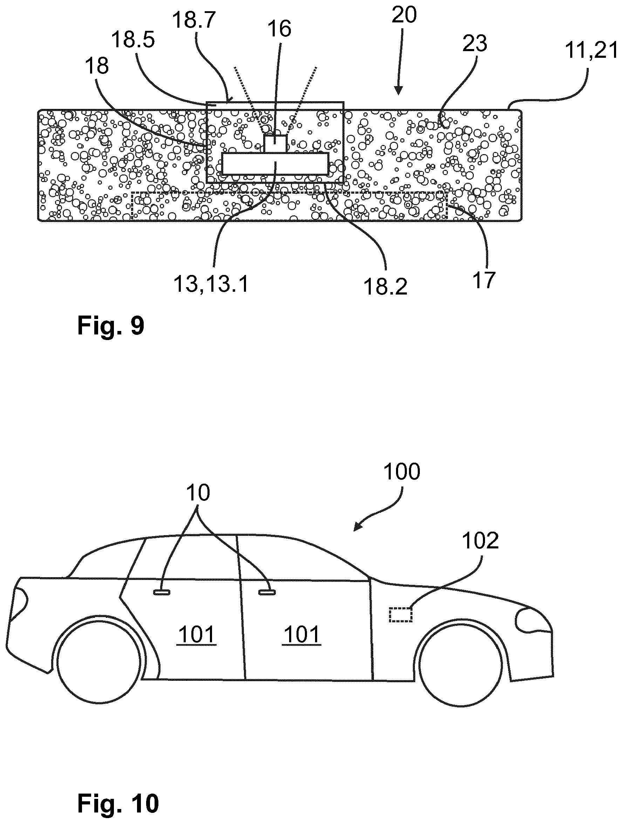

In Figur 9 ist eine Draufsicht auf das Elektronikmodul 20 innerhalb des Gehäuses 21 dargestellt. Dabei ist die Elektronikeinheit 15 bereits in dem Gehäuse 21 bzw. dem Unterteil 11 vom Türgriff 10 mit Vergussmasse 23 derart vergossen, dass nur noch der Vorsprung 13.1 vom Leiterelement sowie die Lichtkappe 18 aus der Vergussmasse 23 herausragen. Dabei wird deutlich, dass die Lichtkappe 18 keineswegs die komplette Gehäuseöffnung 21 bzw. vom Unterteil 11 verdecken müssen. Vielmehr reicht eine partielle Abdeckung des Vorsprungs 13.1 durch die Lichtkappe 18. Zusätzlich ist in der Figur 9 auch ein Füllpad 17 gestrichelt angedeutet, welches innerhalb der Vergussmasse 23 integriert ist. Dieses Füllpad 17 dient dazu, Feuchtigkeit im Bereich eines kapazitiven Sensorelements 14.1 sicher und zuverlässig zu vermeiden. Außerdem wird aus Figur 9 deutlich, dass die Lichtkappe 18 seitlich über den Rand des Gehäuses 21 hinausragen kann und zwar mit dem Lichtleiter 18.5 bzw. Leuchtvorsprung 18.6.

In der Figur 10 ist das erfindungsgemäße Fahrzeug 100 als Kraftfahrzeug dargestellt, wobei an den Fahrzeugtüren 101 jeweils die erfindungsgemäßen Türgriffe 10 anordbar sind. Das fahrzeugseitige System 102 ist gestrichelt im Bereich der Motorhaube angedeutet.

### Bezugszeichenliste

- 10: Türgriff
- 10.1: Außenseite
- 10.2: Innenseite
- 10.3: Ausnehmung
- 10.4: Mitnehmer
- 10.5: Lagerelement
- 10.6: Kappe, insbesondere für Schließzylinder
- 10.7: Öffnungen für 18, 18.7
- 11: Unterteil
- 12: Oberteil
- 13: Leiterelement
- 13.1: Vorsprung für 16
- 14: elektrisches Bauteil
- 14.1: Sensorelement
- 14.2: Mikrochip
- 15: Elektronikeinheit
- 16: Beleuchtungsmittel
- 17: Füllpad
- 18: Lichtkappe
- 18.1: Öffnung
- 18.2: Öffnungsrand
- 18.3: Lüftungsloch
- 18.4: Innenraum
- 18.5: Lichtleiter
- 18.6: Leuchtvorsprung
- 18.7: Lichtaustrittsfläche
- 18.8: Verschlussmittel
- 18.9: Linse
- 19: Haltemittel
- 20: Elektronikmodul
- 21: Gehäuse
- 22: Stecker
- 23: Vergussmasse

- 100: Fahrzeug
- 101: bewegliches Teil, Fahrzeugtür
- 102: fahrzeugseitiges System, insbesondere Sicherheitssystem

## Patentansprüche

1. Elektronikmodul (20), insbesondere für einen Türgriff (10) eines Fahrzeuges (100), mit wenigstens einem Leiterelement (13), an dem zumindest ein elektrisches Bauteil (14) elektrisch angeordnet ist, wobei das Leiterelement (13) und die verbundenen elektrischen Bauteile (14) eine Elektronikeinheit (15) bilden, und
die Elektronikeinheit (15) mit zumindest einem fahrzeugseitigen System (102), insbesondere Sicherheitssystem (102), datentechnisch verbindbar ist, und
mit wenigstens einem Beleuchtungsmittel (16), wodurch Licht (16.1) ausstrahlbar ist, wobei das Beleuchtungsmittel (16) elektrisch an dem Leiterelement (13) angeordnet ist, wobei wenigstens eine Lichtkappe (18) mit einem Öffnungsrand (18.2) vorgesehen ist, die das zumindest eine Beleuchtungsmittel (16) vor äußeren Einflüssen schützt, und die Lichtkappe (18) das vom Beleuchtungsmittel (16) ausgestrahlte Licht (16.1) weiterleitet, und mit einer Vergussmasse (23)
**dadurch gekennzeichnet,**
**dass** die Elektronikeinheit (15) zumindest ein Sensorelement (14.1) als elektrisches Bauteil (14) aufweist, wobei die Elektronikeinheit (15) in einem Unterteil (11) eines Türgriffs (10) und/oder einem Gehäuse (21) anordbar ist und zumindest teilweise durch die Vergussmasse (23) darin fixierbar ist, so dass die Elektronikeinheit (15) zumindest teilweise durch die Vergussmasse (23) geschützt ist und der Öffnungsrand (18.2) vollständig in die Vergussmasse (23) ragt.

2. Elektronikmodul (20) nach Anspruch 1,
**dadurch gekennzeichnet,**
**dass** die Lichtkappe (18) zumindest teilweise transluzent bzw. transparent ausgestaltet ist; und/oder
**dass** die Lichtkappe (18) ein zumindest teilweise durchsichtiges Material, insbesondere Glas oder Kunststoff, aufweist,
wobei insbesondere als Material Polycarbonat (kurz: PC), Polymethylmethacrylat (kurz: PMMA), Polyetherimid (kurz: PEI) und/oder Polysulfon (kurz: PSU) zum Einsatz kommt.

3. Elektronikmodul (20) nach einem der vorherigen Ansprüche,
**dadurch gekennzeichnet,**
**dass** die Lichtkappe (18) zumindest eine Öffnung (18.1) mit dem Öffnungsrand (18.2) aufweist, und
wobei insbesondere die Lichtkappe (18) einen Innenraum (18.4) aufweist, in dem zumindest das Beleuchtungsmittel (16) durch die Öffnung (18.1) anordbar ist, und wobei insbesondere die Lichtkappe (18) ein Lüftungsloch (18.3) aufweist, das mit einem Verschlussmittel (18.8), insbesondere Stopfen, verschließbar ist.

4. Elektronikmodul (20) nach einem der vorherigen Ansprüche,
**dadurch gekennzeichnet,**
**dass** die Lichtkappe (18) als Lichtleiter (18.5) mit einer Lichtaustrittsfläche (18.7) für zumindest ein Beleuchtungsmittel (16) dient und
vorzugsweise eine optische Linse (18.9) und/oder einen Leuchtvorsprung (18.6) aufweist,
wobei insbesondere am Leuchtvorsprung (18.6) die Lichtaustrittsfläche (18.7) vorgesehen ist.

5. Elektronikmodul (20) nach einem der vorherigen Ansprüche,
**dadurch gekennzeichnet,**
**dass** das Beleuchtungsmittel (16) direkt an dem Leiterelement (13) angeordnet ist; und/oder
**dass** das Beleuchtungsmittel (16) als zumindest eine Lampe, LED oder OLED ausgestaltet ist.

6. Elektronikmodul (20) nach einem der vorherigen Ansprüche,
**dadurch gekennzeichnet,**
**dass** die Elektronikeinheit (15) zumindest zwei Beleuchtungsmittel (16) aufweist, wobei insbesondere je Beleuchtungsmittel (16) eine Lichtkappe (18) vorhanden ist; und/oder
**dass** das Sensorelement (14.1) als kapazitiver Sensor ausgestaltet ist.

7. Elektronikmodul (20) nach einem der vorherigen Ansprüche,
**dadurch gekennzeichnet,**
**dass** das Leiterelement (13) zumindest einen Vorsprung (13.1) aufweist, an dem das Beleuchtungsmittel (16) elektrisch angeordnet ist, und
insbesondere der Vorsprung (13.1) mit dem Beleuchtungsmittel (16) von der Lichtkappe (18) umgeben ist.

8. Elektronikmodul (20) nach einem der vorherigen Ansprüche,
**dadurch gekennzeichnet,**
**dass** das Elektronikmodul (20) ein Gehäuse (21) aufweist, wobei die Elektronikeinheit (15) zumindest teilweise mit dem Leiterelement (13), den elektrischen Bauteilen (14) und dem Beleuchtungsmittel (16) innerhalb des Gehäuses (21) angeordnet sind, und
wobei insbesondere zumindest ein Teil des Gehäuses (21) durch die Lichtkappe (18) gebildet ist; und/oder
**dass** zwischen dem Gehäuse (21) des Elektronikmoduls (20) und der Lichtkappe (18) eine Verbindungslinie ist, die mit der Vergussmasse (23) abgedichtet ist.

9. Elektronikmodul (20) nach einem der vorherigen Ansprüche,
**dadurch gekennzeichnet,**
**dass** die Lichtkappe (18) über zumindest ein Haltemittel (19) mit dem Gehäuse (21) und/oder der Elektronikeinheit (15) und/oder dem Türgriff (10) verbindbar ist, wobei insbesondere das Haltemittel (19) als Haltebügel, Halteklemme und/oder Rastmittel ausgestaltet ist und vorzugsweise eine Labyrinthdichtung mit dem Gehäuse (21) bildet.

10. Elektronikmodul (20) nach einem der vorherigen Ansprüche,
**dadurch gekennzeichnet,**
**dass** das Beleuchtungsmittel (16) frei von Vergussmasse (23) ist.

11. Elektronikmodul (20) nach einem der vorherigen Ansprüche,
**dadurch gekennzeichnet,**
**dass** die Lichtkappe (18) ausschließlich über die Vergussmasse (23) an der Elektronikeinheit (15) und/oder dem Türgriff (10) fixiert ist.

12. Elektronikmodul (20) nach einem der vorherigen Ansprüche,
**dadurch gekennzeichnet,**
**dass** das Leiterelement (13) als Leiterplatte, gebogene Leiterplatte und/oder Leiterfolie, insbesondere als Multilayer-Element mit mehreren Leiterbahnen übereinander, ausgestaltet ist.

13. Türgriff (10) für ein Fahrzeug (100) zum Öffnen und Schließen eines beweglichen Teils (101), wie z B. einer Tür, Klappe oder dergleichen, mit
einem Elektronikmodul (20),
wobei insbesondere das Elektronikmodul (20) nach einem der Ansprüche 1 bis 12 ausgestaltet ist,
das zumindest ein Beleuchtungsmittel (16) an einem Leiterelement (13) aufweist, wobei am Leiterelement (13) weitere elektrische Bauteile (14) angeordnet sind, wobei das Leiterelement (13) und die verbundenen elektrischen Bauteile (14) eine Elektronikeinheit (15) bilden,
wobei wenigstens eine Lichtkappe (18) vorgesehen ist, die das zumindest eine Beleuchtungsmittel (16) vor äußeren Einflüssen schützt, und die Lichtkappe (18) das vom Beleuchtungsmittel (16) ausgestrahlte Licht (16.1) zu einer Außenseite (10.1) des Türgriffs (10) weiterleitet,
**dadurch gekennzeichnet,**
**dass** die Elektronikeinheit (15) zumindest ein Sensorelement (14.1) als elektrisches Bauelement (14) aufweist und die Lichtkappe (18) durch eine Vergussmasse (23) verschlossen ist, wobei der Türgriff (10) zumindest ein Unterteil (11) mit einer Ausnehmung (10.3) aufweist, in der zumindest teilweise das Elektronikmodul (20) angeordnet und mit Vergussmasse (23) vergossen ist, und ein Vorsprung (13.1) des Leiterelementes (13) aus der Vergussmasse (23) herausragt, an dem zumindest ein Beleuchtungsmittel (16) angeordnet ist, wobei die Lichtkappe (18) das Beleuchtungsmittel (16) vor äußeren Einflüssen schützt und eine Öffnung der Lichtkappe (18) von der Vergussmasse (23) verschlossen ist, wobei die Elektronikeinheit (15) zumindest teilweise durch die Vergussmasse (23) geschützt ist und die Lichtkappe (18) einen Öffnungsrand (18.2) aufweist, der vollständig in die Vergussmasse (23) ragt.

14. Türgriff (10) nach Anspruch 13,
**dadurch gekennzeichnet,**
**dass** die Lichtkappe (18) eine Lichtaustrittsfläche (18.7) aufweist, die bündig mit der Außenseite (10.1) des Türgriffs (10) ist; und/oder dass zwischen einem Sensorelement (14.1) des Elektronikmoduls (20) und einer Innenseite (10.2) des Türgriffes (10) ein Füllpad (17), insbesondere ein Feuchtigkeitspad, anordbar ist, um eine Feuchtigkeit in dem Bereich des Füllpads (17) zu vermeiden.

15. Verfahren zum Herstellen eines Türgriffes (10) nach einem der Ansprüche 13 bis 14 mit einem Elektronikmodul (20) nach Anspruch 1 bis 12,
**dadurch gekennzeichnet,**
**dass** die folgenden Schritte umfasst sind:
a) Anordnen des Elektronikmoduls (20) in einem Unterteil (11) des Türgriffs (10) und/oder einem Gehäuse (21)
b) Teilweise Vergiessen des Elektronikmoduls (20) mit Vergussmasse (23), wobei zumindest ein Vorsprung (13.1) des Leiterelementes (13) aus der Vergussmasse (23), an dem zumindest das Beleuchtungsmittel (16) angeordnet ist, herausragt
c) Teilweise Eintauchen der Lichtkappe (18) in die noch nicht erstarrte Vergussmasse (23), wobei die Öffnung (18.1) der Lichtkappe (18) vollständig in die Vergussmasse (23) ragt.

## Claims

1. Electronic module (20), in particular for a door handle (10) of a vehicle (100), having at least one conductor element (13), on which at least one electrical component (14) is electrically arranged, the conductor element (13) and the connected electrical components (14) forming an electronic unit (15), and
the electronic unit (15) can be connected to at least one vehicle-side system (102), in particular safety system (102), by means of data technology, and
with at least one illumination means (16), whereby light (16.1) can be emitted, wherein the illumination means (16) is electrically arranged on the conductor element (13), wherein at least one light cap (18) with an opening edge (18.2) is provided, which protects the at least one illumination means (16) from external influences, and the light cap (18) transmits the light (16.1) emitted by the illumination means (16),
and with a potting compound (23)
**characterized in that**
the electronic unit (15) has at least one sensor element (14.1) as an electrical component (14), it being possible for the electronic unit (15) to be arranged in a lower part (11) of a door handle (10) and/or a housing (21) and to be fixed therein at least partially by the potting compound (23), so that the electronic unit (15) is at least partially protected by the potting compound (23) and the opening edge (18.2) projects completely into the potting compound (23).

2. Electronic module (20) according to claim 1,
**characterized in that**
the light cap (18) is at least partially translucent or transparent; and/or
the light cap (18) comprises an at least partially transparent material, in particular glass or plastic,
wherein in particular as material polycarbonate (short: PC), polymethyl methacrylate (abbr: PMMA), polyetherimide (abbr: PEI) and/or polysulfone (abbr: PSU) is used.

3. Electronic module (20) according to any one of the preceding claims,
**characterized in that**
the light cap (18) has at least one opening (18.1) with the opening edge (18.2), and wherein in particular the light cap (18) has an interior space (18.4) in which at least the illumination means (16) can be arranged through the opening (18.1), and
wherein in particular the light cap (18) has a ventilation hole (18.3) which can be closed with a closing means (18.8), in particular a plug.

4. Electronic module (20) according to any one of the preceding claims,
**characterized in that**
the light cap (18) serves as a light guide (18.5) with a light emission surface (18.7) for at least one illumination means (16), and
preferably has an optical lens (18.9) and/or a luminous projection (18.6),
wherein the light emission surface (18.7) is provided in particular at the luminous projection (18.6).

5. Electronic module (20) according to any one of the preceding claims,
**characterized in that**
the illumination means (16) is arranged directly on the conductor element (13); and/or that the illumination means (16) is designed as at least one lamp, LED or OLED.

6. Electronic module (20) according to any one of the preceding claims,
**characterized in that**
the electronics unit (15) has at least two illumination means (16),
wherein in particular one light cap (18) is provided for each illumination means (16); and/or
that the sensor element (14.1) is designed as a capacitive sensor.

7. Electronic module (20) according to any one of the preceding claims,
**characterized in that**
the conductor element (13) has at least one projection (13.1) on which the illumination means (16) is electrically arranged, and
in particular the projection (13.1) with the illumination means (16) is surrounded by the light cap (18).

8. Electronic module (20) according to any one of the preceding claims,
**characterized in that**
the electronic module (20) has a housing (21), the electronic unit (15) being arranged at least partially with the conductor element (13), the electrical components (14) and the illumination means (16) inside the housing (21), and
wherein in particular at least a part of the housing (21) is formed by the light cap (18); and/or
wherein between the housing (21) of the electronic module (20) and the light cap (18) there is a connecting line which is sealed with the potting compound (23).

9. Electronic module (20) according to any one of the preceding claims,
**characterized in that**
the light cap (18) can be connected to the housing (21) and/or the electronic unit (15) and/or the door handle (10) via at least one retaining means (19), the retaining means (19) in particular being designed as a retaining bracket, retaining clamp and/or latching means and preferably forming a labyrinth seal with the housing (21).

10. Electronic module (20) according to any one of the preceding claims,
**characterized in that**
the illumination means (16) is free of potting compound (23).

11. Electronic module (20) according to any one of the preceding claims,
**characterized in that**
the light cap (18) is fixed to the electronic unit (15) and/or the door handle (10) exclusively via the potting compound (23).

12. Electronic module (20) according to any one of the preceding claims,
**characterized in that**
the conductor element (13) is designed as a printed circuit board, bent printed circuit board and/or conductor foil, in particular as a multilayer element with a plurality of conductor tracks one above the other.

13. Door handle (10) for a vehicle (100) for opening and closing a movable part (101), such as a door, flap or the like, comprising
an electronic module (20),
wherein in particular the electronic module (20) is configured according to any one of claims 1 to 12,
which has at least one illumination means (16) on a conductor element (13), further electrical components (14) being arranged on the conductor element (13), the conductor element (13) and the connected electrical components (14) forming an electronic unit (15),
wherein at least one light cap (18) is provided which protects the at least one illumination means (16) from external influences, and the light cap (18) transmits the light (16.1) emitted by the illumination means (16) to an outer side (10.1) of the door handle (10),
**characterized in that**
the electronic unit (15) has at least one sensor element (14.1) as an electrical component (14) and the light cap (18) is sealed by a potting compound (23), the door handle (10) having at least one lower part (11) with a recess (10.3) in which the electronic module (20) is arranged at least partially and is cast with potting compound (23), and a projection (13.1) of the conductor element (13) projects out of the potting compound (23), on which at least one illumination means (16) is arranged, the light cap (18) protecting the illumination means (16) from external influences and an opening of the light cap (18) being closed by the potting compound (23), the electronic unit (15) being at least partially protected by the potting compound (23) and the light cap (18) having an opening edge (18.2) which projects completely into the potting compound (23).

14. Door handle (10) according to claim 13,
**characterized in that**
the light cap (18) has a light emission surface (18.7) which is flush with the outside (10.1) of the door handle (10); and/or **in that** a filling pad (17), in particular a moisture pad, can be arranged between a sensor element (14.1) of the electronics module (20) and an inside (10.2) of the door handle (10) in order to prevent moisture in the region of the filling pad (17).

15. A method of manufacturing a door handle (10) according to any one of claims 13 to 14, comprising an electronic module (20) according to claims 1 to 12,
**characterized in that**
the following steps are comprised:
a) arranging the electronic module (20) in a lower part (11) of the door handle (10) and/or a housing (21)
b) partial potting of the electronic module (20) with potting compound (23), at least one projection (13.1) of the conductor element (13) protruding from the potting compound (23), on which at least the illumination means (16) is arranged
c) partial immersion of the light cap (18) in the not yet solidified potting compound (23), with the opening (18.1) of the light cap (18) projecting completely into the potting compound (23).

## Revendications

1. Module électronique (20), en particulier pour une poignée de porte (10) d'un véhicule (100), comprenant
au moins un élément conducteur (13), sur lequel au moins un composant électrique (14) est disposé électriquement, l'élément conducteur (13) et les composants électriques (14) reliés formant une unité électronique (15), et
l'unité électronique (15) peut être reliée par technique de données à au moins un système (102) côté véhicule, en particulier un système de sécurité (102), et
avec au moins un moyen d'éclairage (16), par lequel de la lumière (16.1) peut être émise, le moyen d'éclairage (16) étant disposé électriquement sur l'élément conducteur (13),
dans lequel il est prévu au moins un capuchon lumineux (18) avec un bord d'ouverture (18.2), qui protège le au moins un moyen d'éclairage (16) des influences extérieures, et le capuchon lumineux (18) transmet la lumière (16.1) émise par le moyen d'éclairage (16),
et avec une masse de scellement (23)
**caractérisé en ce que**
l'unité électronique (15) présente au moins un élément capteur (14.1) en tant que composant électrique (14), l'unité électronique (15) pouvant être disposée dans une partie inférieure (11) d'une poignée de porte (10) et/ou dans un boîtier (21) et pouvant y être fixée au moins partiellement par la masse de scellement (23), de sorte que l'unité électronique (15) est protégée au moins partiellement par la masse de scellement (23) et que le bord d'ouverture (18.2) pénètre complètement dans la masse de scellement (23).

2. Module électronique (20) selon la revendication 1,
**caractérisé en ce que**
le capuchon lumineux (18) est conçu au moins partiellement translucide ou transparent ; et/ou
**en ce que** le capuchon lumineux (18) présente un matériau au moins partiellement transparent, en particulier du verre ou du plastique,
dans lequel, en particulier, le matériau utilisé comprend polycarbonate (en bref: PC), polyméthacrylate de méthyle (en bref: PMMA), polyétherimide (en bref: PEI) et/ou du polysulfone (en bref: PSU).

3. Module électronique (20) selon l'une des revendications précédentes,
**caractérisé en ce que**
le capuchon lumineux (18) présente au moins une ouverture (18.1) avec le bord d'ouverture (18.2), et
dans lequel, en particulier, le capuchon lumineux (18) présente un espace intérieur (18.4) dans lequel au moins le moyen d'éclairage (16) peut être disposé à travers l'ouverture (18.1), et
dans lequel, en particulier, le capuchon lumineux (18) présente un trou d'aération (18.3) qui peut être fermé par un moyen de fermeture (18.8), en particulier un bouchon.

4. Module électronique (20) selon l'une des revendications précédentes,
**caractérisé en ce que**
le capuchon lumineux (18) sert de guide de lumière (18.5) avec une surface de sortie de lumière (18.7) pour au moins un moyen d'éclairage (16) et
présente de préférence une lentille optique (18.9) et/ou une saillie lumineuse (18.6), la surface de sortie de lumière (18.7) étant prévue en particulier sur la saillie lumineuse (18.6).

5. Module électronique (20) selon l'une des revendications précédentes,
**caractérisé en ce que**
le moyen d'éclairage (16) est disposé directement sur l'élément conducteur (13) ; et/ou le moyen d'éclairage (16) est conçu comme au moins une lampe, une LED ou une OLED.

6. Module électronique (20) selon l'une des revendications précédentes,
**caractérisé en ce que**
l'unité électronique (15) présente au moins deux moyens d'éclairage (16),
un capuchon lumineux (18) étant notamment présent pour chaque moyen d'éclairage (16) ; et/ou
l'élément capteur (14.1) est conçu comme un capteur capacitif.

7. Module électronique (20) selon l'une des revendications précédentes,
**caractérisé en ce que**
l'élément conducteur (13) présente au moins une saillie (13.1) sur laquelle le moyen d'éclairage (16) est disposé électriquement, et
en particulier la saillie (13.1) avec le moyen d'éclairage (16) est entourée par le capuchon lumineux (18).

8. Module électronique (20) selon l'une des revendications précédentes,
**caractérisé en ce que**
le module électronique (20) présente un boîtier (21), l'unité électronique (15) étant disposée au moins partiellement avec l'élément conducteur (13), les composants électriques (14) et le moyen d'éclairage (16) à l'intérieur du boîtier (21), et
dans lequel, en particulier, au moins une partie du boîtier (21) est formée par le capuchon lumineux (18) ; et/ou
dans lequel entre le boîtier (21) du module électronique (20) et le capuchon lumineux (18) se trouve une ligne de jonction qui est rendue étanche par la masse de scellement (23).

9. Module électronique (20) selon l'une des revendications précédentes,
**caractérisé en ce que**
le capuchon lumineux (18) peut être relié par au moins un moyen de retenue (19) au boîtier (21) et/ou à l'unité électronique (15) et/ou à la poignée de porte (10), le moyen de retenue (19) étant notamment conçu comme un étrier de retenue, une pince de retenue et/ou un moyen d'encliquetage et formant de préférence un joint à labyrinthe avec le boîtier (21).

10. Module électronique (20) selon l'une des revendications précédentes,
**caractérisé en ce que**
le moyen d'éclairage (16) est exempt de masse de scellement (23).

11. Module électronique (20) selon l'une des revendications précédentes,
**caractérisé en ce que**
le capuchon lumineux (18) est fixé à l'unité électronique (15) et/ou à la poignée de porte (10) exclusivement par la masse de scellement (23).

12. Module électronique (20) selon l'une des revendications précédentes,
**caractérisé en ce que**
l'élément conducteur (13) est réalisé sous la forme d'une carte imprimée, d'une carte imprimée incurvée et/ou d'une feuille conductrice, en particulier sous la forme d'un élément multicouche avec plusieurs pistes conductrices superposées.

13. Poignée de porte (10) pour un véhicule (100) pour ouvrir et fermer une partie mobile (101), telle qu'une porte, un volet ou similaire, comprenant
un module électronique (20),
le module électronique (20) étant notamment configuré selon l'une des revendications 1 à 12,
qui présente au moins un moyen d'éclairage (16) sur un élément conducteur (13), d'autres composants électriques (14) étant disposés sur l'élément conducteur (13), l'élément conducteur (13) et les composants électriques (14) reliés formant une unité électronique (15),
dans lequel il est prévu au moins un capuchon lumineux (18) qui protège le au moins un moyen d'éclairage (16) des influences extérieures, et le capuchon lumineux (18) transmet la lumière (16.1) émise par le moyen d'éclairage (16) à un côté extérieur (10.1) de la poignée de porte (10),
**caractérisé en ce que**
l'unité électronique (15) présente au moins un élément capteur (14.1) comme composant électrique (14) et le capuchon lumineux (18) est fermé par une masse de scellement (23), la poignée de porte (10) présentant au moins une partie inférieure (11) avec un évidement (10.3) dans lequel est disposé au moins partiellement le module électronique (20) et est scellé avec la masse de scellement (23), et une saillie (13.1) de l'élément conducteur (13) dépasse de la masse de scellement (23), sur laquelle est disposé au moins un moyen d'éclairage (16), le capuchon lumineux (18) protégeant le moyen d'éclairage (16) des influences extérieures et une ouverture du capuchon lumineux (18) étant fermée par la masse de scellement (23), l'unité électronique (15) étant protégée au moins partiellement par la masse de scellement (23) et le capuchon lumineux (18) présentant un bord d'ouverture (18.2) qui pénètre entièrement dans la masse de scellement (23).

14. Poignée de porte (10) selon la revendication 13,
**caractérisé en ce que**
le capuchon lumineux (18) présente une surface de sortie de lumière (18.7) qui est à fleur de la face extérieure (10.1) de la poignée de porte (10) ; et/ou **en ce qu'**entre un élément capteur (14.1) du module électronique (20) et une face intérieure (10.2) de la poignée de porte (10) peut être disposé un pad de remplissage (17), en particulier un pad d'humidité, afin d'éviter une humidité dans la zone du pad de remplissage (17).

15. Procédé de fabrication d'une poignée de porte (10) selon l'une quelconque des revendications 13 à 14, comprenant un module électronique (20) selon les revendications 1 à 12,
**caractérisé en ce que**
les étapes suivantes sont comprises :
a) disposer le module électronique (20) dans une partie inférieure (11) de la poignée de porte (10) et/ou dans un boîtier (21)
b) scellement partiel du module électronique (20) avec une masse de scellement (23), au moins une saillie (13.1) de l'élément conducteur (13), sur laquelle est disposé au moins le moyen d'éclairage (16), dépassant de la masse de scellement (23)
c) immersion partielle du capuchon lumineux (18) dans la masse de scellement (23) non encore solidifiée, l'ouverture (18.1) du capuchon lumineux (18) dépassant complètement dans la masse de scellement (23).
